# EUROPEAN PATENT SPECIFICATION

(11) **EP 3 255 357 B1**
(45) Date of publication and mention of the grant of the patent: **04.09.2019**
(21) Application number: 15881210.7
(22) Date of filing: 11.12.2015
(51) Int. Cl.: F24S 70/10, F24S 70/16

(54) **SOLAR HEAT COLLECTION TUBE, SOLAR LIGHT/HEAT CONVERSION DEVICE, AND SOLAR POWER GENERATION DEVICE**
ROHR ZUR SONNENWÄRMEGEWINNUNG, SONNENLICHT-/WÄRMEUMWANDLUNGSVORRICHTUNG UND SONNENENERGIEERZEUGUNGSVORRICHTUNG
TUBE DE CAPTATION DE CHALEUR SOLAIRE, DISPOSITIF DE CONVERSION LUMIÈRE SOLAIRE/CHALEUR ET DISPOSITIF DE PRODUCTION D'ÉNERGIE SOLAIRE

(30) Priority: 06.02.2015 JP 2015021810
(43) Date of publication of application: 13.12.2017
(73) Proprietor: Kabushiki Kaisha Toyota Jidoshokki, Kariya-shi, Aichi 448-8671 (JP); Japan Fine Ceramics Center, Nagoya-shi, Aichi-ken 456-8587 (JP)
(72) Inventor: TSUTSUI, Takuhito, Kariya-shi Aichi 448-8671 (JP); SASATANI, Toru, Kariya-shi Aichi 448-8671 (JP); NORITAKE, Kazuto, Kariya-shi Aichi 448-8671 (JP); OKUHARA, Yoshiki, Nagoya-shi Aichi 456-8587 (JP); KUROYAMA, Tomohiro, Nagoya-shi Aichi 456-8587 (JP); IGIMI, Daisuke, Nagoya-shi Aichi 456-8587 (JP)
(74) Representative: TBK
(86) International application number: PCT/JP2015/084787
(87) International publication number: WO 2016/125393

(56) References cited:
- WO-A1-99/11715
- WO-A1-2014/007218
- WO-A1-2014/007218
- WO-A1-2014/181586
- WO-A2-2013/072731
- GB-A- 2 082 316
- JP-A- H1 161 490
- JP-A- H1 161 490
- JP-A- H02 298 760
- JP-A- H02 298 760
- JP-B2- S6 042 258
- JP-B2- S6 136 142
- US-A1- 2004 126 594

## Description

### TECHNICAL FIELD

The present invention relates to a solar heat collection tube, a sunlight-to-heat conversion device and a solar heat power generation device.

### BACKGROUND ART

Solar heat power generation devices are known that convert sunlight into heat and utilize this heat for power generation. In such devices, sunlight is concentrated by a light-concentrating means, and a heat medium in the interior of a solar heat collection tube is heated up by the concentrated sunlight, after which the thermal energy of the heated heat medium is utilized in a power generator to generate power as a result. From the viewpoint of increasing the efficiency of conversion of sunlight to heat (and thus increasing power generation efficiency), an approach has accordingly been studied that involves forming, for instance, a layer (hereafter referred to as "sunlight-to-heat conversion layer") that converts sunlight at the outer surface of the solar heat collection tube into heat, to thereby promote heating of the heat medium by concentrated sunlight.

For instance, Patent Document 1 proposes the use of a cermet layer as a sunlight-to-heat conversion layer. The term cermet denotes a composite material of ceramic and metal materials.

Also, Patent Document 2 proposes the use of a sheet material having a sensitive coating formed on one side of the material and a radiative coating formed on the other side, as a sunlight-to-heat conversion layer.

Patent Document 3 discloses a solar heat collection tube as recited in the preamble of claim 1, which includes a sunlight-to-heat conversion layer made of metal nitride containing at least one metal element selected from the group consisting of Cr, Fe and Ni, Si and N.

Patent Document 4 discloses a solar absorption plate including a solar absorption material of an Al-Mn-Si system. When the amount of Mn exceeds 2.0% by weight, Mn combines with Si, the generated amount of intermetallic compound of the Al-Mn-Si system increases, and far-infrared radiation characteristics are improved.
Patent Document 1: EP 1 397 622 B1
Patent Document 2: JP S57 55363 A
Patent Document 3: WO 2014/007218 A1
Patent Document 4: JP H11 61490 A

### SUMMARY OF THE INVENTION

### PROBLEMS TO BE SOLVED BY THE INVENTION

However, a solar heat collection tube having a conventional sunlight-to-heat conversion layer such as those above still exhibits insufficient efficiency in conversion of sunlight to heat. Accordingly, it is highly desired to convert sunlight more efficiently into heat by accelerating the heating of a heat medium by concentrated sunlight.

The present invention is developed to solve the above problem and an object of the invention is to provide a solar heat collection tube and a sunlight-to-heat conversion device that allow sunlight to be converted into heat efficiently.

It is a further object of the present invention to provide a solar heat power generation device of high power generation efficiency.

### MEANS FOR SOLVING THE PROBLEMS

As a result of diligent research directed at solving the above problem the inventors found that manganese silicide has characteristics suitable for use in sunlight-to-heat conversion layers, and arrived at the present invention on the basis of that finding.

Specifically, the present invention is as set forth in the claims.

### ADVANTAGEOUS EFFECTS OF THE INVENTION

The present invention succeeds in providing a solar heat collection tube and a sunlight-to-heat conversion device that allow sunlight to be converted into heat efficiently.

The present invention further allows the provision of a solar heat power generation device of high power generation efficiency.

### BRIEF DESCRIPTION OF THE DRAWINGS

Fig. 1 is a cross-sectional diagram of a solar heat collection tube of Embodiment 1.
Fig. 2 is a graph illustrating the light spectrum of sunlight and light spectra of blackbody radiation.
Fig. 3 is a cross-sectional diagram of a solar heat collection tube of Embodiment 1 further having a light-transmitting layer between an infrared reflective layer and a sunlight-to-heat conversion layer.
Fig. 4 is a cross-sectional diagram of a sunlight-to-heat conversion device of Embodiment 2.
Fig. 5 is a diagram for explaining a stack produced in Example 1.
Fig. 6 is a diagram for explaining a stack produced in Example 2.
Fig. 7 is a diagram for explaining a stack produced in Comparative example 1.
Fig. 8 is a graph illustrating absorption characteristics of stacks of Examples 1 to 2 and Comparative example 1.

### DESCRIPTION OF EMBODIMENTS

### Embodiment 1

A preferred embodiment of the solar heat collection tube of the present invention will be explained next with reference to the accompanying drawings.

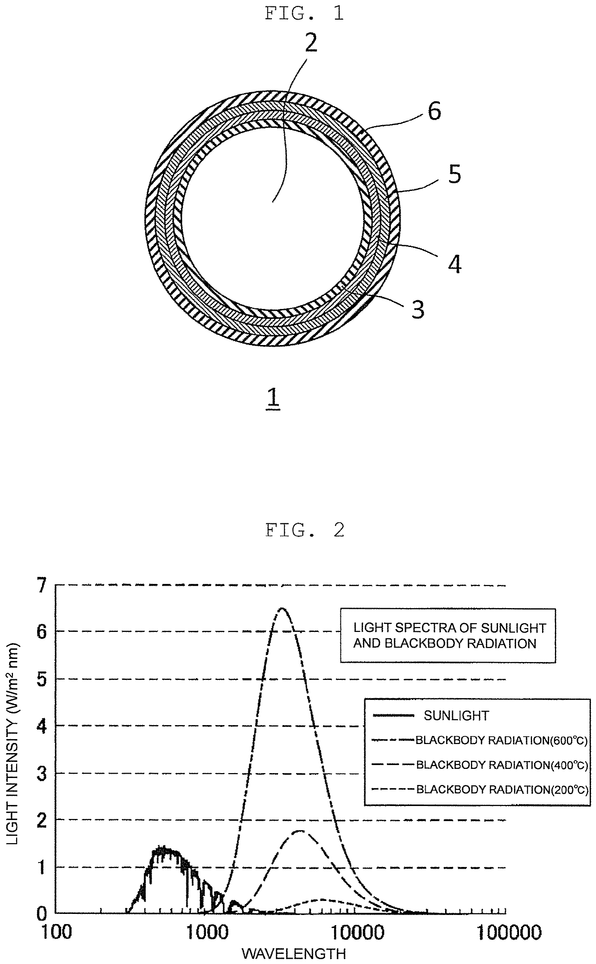

Fig. 1 is a cross-sectional diagram of a solar heat collection tube of the present embodiment.

In Fig. 1 a solar heat collection tube 1 of the present invention has a tube 3 in which a heat medium 2 can flow, an infrared reflective layer 4 formed on the outer surface of the tube 3, a sunlight-to-heat conversion layer 5 formed on the infrared reflective layer 4, and an anti-reflection layer 6 formed on the sunlight-to-heat conversion layer 5.

A known tube in the relevant technical field can be used, without particular limitations, as the tube 3 in which the heat medium 2 can flow. As the material of the tube 3 there can be ordinarily used a metal having good heat resistance, an iron-based material (for instance, stainless steel, heat-resistant steel, alloy steel or carbon steel), an aluminum-based material, or the like. A tube 3 made up of stainless steel or heat-resistant steel is preferred among the foregoing, given the usage environment (for instance, the heating temperature of the tube 3).

A known heat medium in the relevant technical field can be used, without particular limitations, as the heat medium 2 that flows through the interior of the tube 3. Examples of the heat medium 2 include water, oil, and molten salts (for instance, molten sodium).

The infrared reflective layer 4 formed on the outer surface of the tube 3 has a function of reflecting thermal radiation (heat radiation) from the heat medium 2 and the tube 3. Generally the materials of the heat medium 2, the tube 3 and so forth become warmed up to a high temperature, of about 600°C in solar heat applications. Most of the electromagnetic waves radiated in that case are infrared rays. Accordingly, the infrared reflective layer 4 mainly has the function of reflecting light of the infrared region. Specifically, the infrared reflective layer 4 suppresses dissipation to the exterior of the tube 3, due to thermal radiation, of the thermal energy that is imparted to the heat medium 2 and the tube 3.

A known infrared reflective layer in the relevant technical field can be used, without particular limitations, as the infrared reflective layer 4. Examples of the infrared reflective layer 4 include a molybdenum (Mo) layer, a tungsten (W) layer, a silver (Ag) layer, a gold (Au) layer, and a copper (Cu) layer. Preferred among the foregoing is a molybdenum (Mo) layer having the function of assisting absorption of sunlight while reflecting thermal radiation.

The thickness of the infrared reflective layer 4 is not particularly limited so long as the effect of the present invention can be achieved, but is preferably of 10 nm to 500 nm.

A known method in the relevant technical field can be used, without particular limitations, as the method for forming the infrared reflective layer 4. For instance, the infrared reflective layer 4 can be formed by chemical vapor deposition or physical vapor deposition (sputtering, vacuum vapor deposition, ion plating, or the like).

The sunlight-to-heat conversion layer 5 formed on the infrared reflective layer 4 has the function of efficiently absorbing sunlight while allowing suppression of heat dissipation by thermal radiation.

The sunlight-to-heat conversion layer 5 contains manganese silicide. The above functions can be brought out through the use of manganese silicide in the sunlight-to-heat conversion layer 5.

The term "manganese silicide" refers herein to a compound made up of silicon (Si) and manganese (Mn). Examples of manganese silicide include MnSi, Mn₄Si₇, Mn₁₁Si₁₉, Mn₁₅Si₂₆, and Mn₂₇Si₄₇.

The manganese silicide is a metal or a semiconductor, depending on the proportion of silicon and manganese. For instance, MnSi is a metal having an electrical resistivity of 2 × 10⁻⁸ Ωm, whereas Mn₁₁Si₁₉ is a semiconductor.

Manganese silicide as a metal basically absorbs light of all wavelengths, and accordingly the slope of absorptivity is gentler than that of manganese silicide as a semiconductor. Among various manganese silicides, therefore, the manganese silicide used in the sunlight-to-heat conversion layer 5 contains semiconductor manganese silicide, in particular Mn₁₁Si₁₉, as a main component.

In the present description, the term "main component" denotes the component of highest content in a composition that contains various components, and specifically denotes a component the content of which is higher than 50 mass%.

Herein Mn₁₁Si₁₉ is a semiconductor having a band gap of 0.64 eV; accordingly, Mn₁₁Si₁₉ has the property of absorbing light of a shorter wavelength than the wavelength (about 1937 nm) corresponding to this band gap, but not absorbing light of a wavelength exceeding the wavelength corresponding to the band gap. The slope of absorptivity of Mn₁₁Si₁₉ in the vicinity of the wavelength corresponding to the band gap is therefore steep. Accordingly, Mn₁₁Si₁₉ has optical characteristics including high absorptivity towards visible light up to near-infrared light, with wavelengths of several hundred nm, and low absorptivity towards infrared light of wavelengths of several thousand nm.

Fig. 2 illustrates the light spectrum of sunlight and light spectra of blackbody radiation. As illustrated in Fig. 2, the light spectrum of sunlight spreads around a visible light region of several hundred nm, whereas the light spectra of blackbody radiation at several hundred °C (for instance, 200°C to 600°C), being the temperature to which the sunlight-to-heat conversion layer 5 is exposed, spread around an infrared region having a wavelength of several thousand nm.

In general, the emissivity (emittance) of an opaque material corresponds to the absorptivity thereof, such that when emissivity at a given wavelength region is high, absorptivity in that same wavelength region is likewise high.

Therefore, in order to obtain the sunlight-to-heat conversion layer 5 having high sunlight absorptivity and exhibiting little heat dissipation by thermal radiation, it is necessary to increase the light absorptivity, from the visible region to the near-infrared region, with wavelengths of several hundred nm, and to reduce absorptivity towards light of the infrared region, with wavelengths of several thousand nm.

The sunlight-to-heat conversion layer 5 that is used in the solar heat collection tube 1 of the present embodiment contains manganese silicide having optical characteristics such as those described above. Therefore, light of the visible light region with wavelengths of several hundred nm, over which the spectrum of sunlight is distributed, can be absorbed effectively, while allowing suppression of absorption (i.e. radiation) of light of the infrared region having wavelengths of several thousand nm.

Regarding absorptivity with respect to light wavelengths, the sunlight-to-heat conversion layer 5 used in the solar heat collection tube 1 of the present embodiment has high absorptivity at shorter wavelengths (from the visible light region towards the near-infrared region) than a wavelength region of 1000 nm to 2480 nm, and low absorptivity at longer wavelengths (infrared region) than the wavelength region of 1000 nm to 2480 nm. That is, absorptivity changes sharply in a narrow wavelength region of 1000 nm to 2480 nm. Accordingly, it becomes possible to keep thermal radiation-derived losses low while allowing sunlight to be absorbed with good efficiency. Sunlight can be efficiently converted into heat as a result. In a case where by contrast the change of absorptivity with respect to light wavelength is gentle, the absorptivity towards sunlight of the near-infrared region is low, while emissivity of light of the infrared region is high, and thermal energy loss increases as a result.

The sunlight-to-heat conversion layer 5 may contain manganese silicide alone, but may further contain materials other than manganese silicide. Specifically, the sunlight-to-heat conversion layer 5 may be made up of manganese silicide alone, or of a composite material of manganese silicide and a material other than manganese silicide.

A transparent dielectric material can be used as the material other than manganese silicide used in the composite material. The characteristics of the sunlight-to-heat conversion layer 5, for instance the refractive index, can be adjusted by using a composite material of manganese silicide and a transparent dielectric material. A known transparent dielectric material in the relevant technical field can be used, without particular limitations, as the above transparent dielectric material. Examples of transparent dielectric materials include SiO₂, Al₂O₃, and AlN. Among the foregoing SiO₂ is preferable from the viewpoint of reducing light reflection. For instance, a composite material of manganese silicide and SiO₂, exhibits a sharp change in light absorptivity with respect to wavelength (change from high absorptivity to low absorptivity), similarly to the case of single manganese silicide alone. Further, the composite material has high absorptivity in the visible to near-infrared regions, over which the spectrum of sunlight is distributed, and low emissivity (i.e. low absorptivity) in the infrared region.

In a case where a composite material is used, the content of manganese silicide of the composite material is not particularly limited, but can be set for instance to 10 vol% or more, 20 vol% or more, 30 vol% or more, 40 vol% or more, 50 vol% or more, 60 vol% or more, 70 vol % or more, 80 vol% or more, 90 vol% or more, or 95 vol% or more.

The thickness of the sunlight-to-heat conversion layer 5 is not particularly limited so long as the effect of the present invention can be achieved, but is preferably of 1 nm to 10 µm, more preferably of 5 nm to 100 nm.

The sunlight-to-heat conversion layer 5 may be a single layer or a plurality of layers made up of a sunlight-to-heat conversion layer 5 of different types.

A known method in the relevant technical field can be used, without particular limitations, as the method for forming the sunlight-to-heat conversion layer 5. For instance, the sunlight-to-heat conversion layer 5 can be formed by chemical vapor deposition or physical vapor deposition (sputtering, vacuum vapor deposition, ion plating, or the like) .

The anti-reflection layer 6 formed on the sunlight-to-heat conversion layer 5 has the function of preventing reflection of sunlight.

A known anti-reflection layer in the relevant technical field can be used, without particular limitations, as the anti-reflection layer 6. Examples of the anti-reflection layer 6 include transparent dielectric material layers such as SiO₂ layers, Al₂O₃ layers, AlN layers, and Cr₂O₃ layers.

The thickness of the anti-reflection layer 6 is not particularly limited so long as the effect of the present invention can be achieved, but is preferably of 10 nm to 500 nm.

A known method in the relevant technical field can be used, without particular limitations, as the method for forming the anti-reflection layer 6. For instance, the anti-reflection layer 6 can be formed by chemical vapor deposition or physical vapor deposition (sputtering, vacuum vapor deposition, or ion plating).

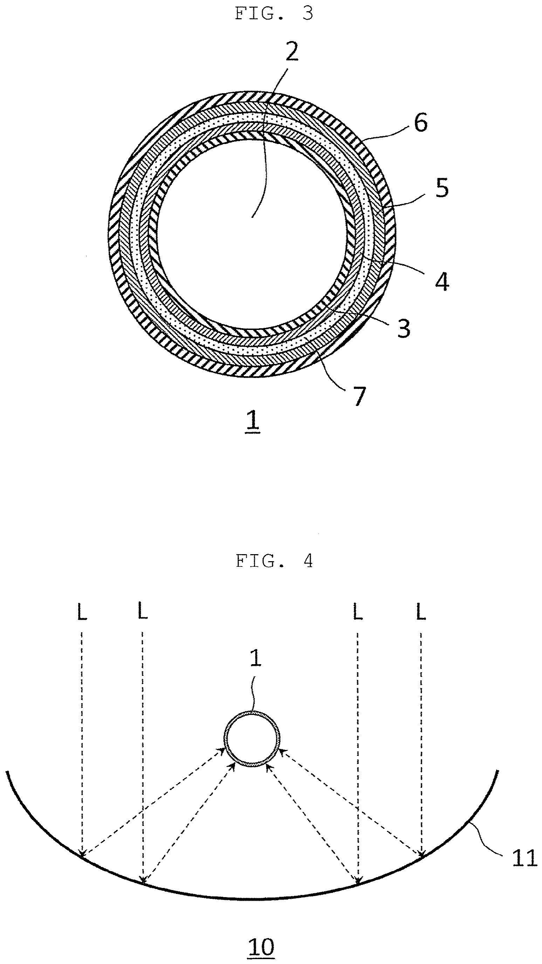

The solar heat collection tube 1 of the present embodiment has the above features as an essential configuration, but may also have a light-transmitting layer 7 between the infrared reflective layer 4 and the sunlight-to-heat conversion layer 5, as illustrated in Fig. 3.

The light-transmitting layer 7 has the function of promoting absorption of light at the sunlight-to-heat conversion layer 5, by exploiting interference effects.

A known light-transmitting layer in the relevant technical field can be used, without particular limitations, as the light-transmitting layer 7. Examples of the light-transmitting layer 7 include transparent dielectric material layers such as SiO₂ layers, Al₂O₃ layers, AlN layers, and Cr₂O₃ layers.

The thickness of the light-transmitting layer 7 is not particularly limited so long as the effect of the present invention can be achieved, but is preferably of 1 nm to 100 nm.

A known method in the relevant technical field can be used, without particular limitations, as the method for forming the light-transmitting layer 7. For instance, the light-transmitting layer 7 can be formed by chemical vapor deposition or physical vapor deposition (sputtering, vacuum vapor deposition, or ion plating).

The solar heat collection tube 1 of the present invention configured in such a manner has the sunlight-to-heat conversion layer 5 in which light absorptivity changes from a high state to a low state in a narrow wavelength region, from 1000 nm to 2480 nm (i.e. having a steep change in absorptivity characteristic). Therefore, sunlight can be absorbed efficiently while allowing suppression of heat dissipation by thermal radiation, and the light energy of sunlight can be converted efficiently into thermal energy.

### Embodiment 2

A preferred embodiment of the sunlight-to-heat conversion device of the present invention will be explained next with reference to accompanying drawings.

Fig. 4 is a cross-sectional diagram of a sunlight-to-heat conversion device of the present embodiment.

In Fig. 4, the sunlight-to-heat conversion device 10 of the present embodiment has the solar heat collection tube 1 of Embodiment 1 and a light-concentrating means 11 for concentrating sunlight L onto the solar heat collection tube 1. For greater clarity, Fig. 4 does not illustrate the detailed configuration of the solar heat collection tube 1.

A known light-concentrating means in the relevant technical field can be used, without particular limitations, as the light-concentrating means 11, so long as the means is capable of concentrating sunlight L onto the solar heat collection tube 1. The light-concentrating means 11 has generally a shape, referred to as a trough type, the cross-section of which constitutes a paraboloid surface. The inner face (surface one side of the solar heat collection tube 1) of the light-concentrating means 11 is a mirror surface, and the solar heat collection tube 1 being supported at the focal position of sunlight L reflected by the light-concentrating means 11. The light-concentrating means 11 is not limited to being of a trough type, and for instance a Fresnel-type or linear Fresnel-type light-concentrating means may be used herein.

The sunlight-to-heat conversion device 10 of the present embodiment can be used in order to heat up the heat medium 2 at 300°C to 1100°C, preferably at 400°C to 1000°C, and more preferably at 400°C to 900°C.

In the sunlight-to-heat conversion device 10 having such a configuration, sunlight L is concentrated onto the solar heat collection tube 1 by the light-concentrating means 11, whereupon the heat medium 2 within the solar heat collection tube 1 is heated up by the concentrated sunlight L. The solar heat collection tube 1 onto which the sunlight L is concentrated has the sunlight-to-heat conversion layer 5 that can absorb efficiently the sunlight L while allowing suppression of heat dissipation by thermal radiation from the tube 3 that holds the heated heat medium. As a result, the sunlight L can be efficiently converted into heat.

### Embodiment 3

The solar heat power generation device of the present embodiment has the sunlight-to-heat conversion device 10 of Embodiment 2 and a power generator. In this solar heat power generation device, the heat medium 2 within the solar heat collection tube 1 is heated up by the sunlight-to-heat conversion device 10, and the thermal energy of the heated heat medium 2 is utilized in the power generator to generate power.

The solar heat power generation device having such a configuration has the sunlight-to-heat conversion device 10 capable of converting efficiently sunlight L into heat, and accordingly there can be provided a solar heat power generation device of high power generation efficiency.

The power generator that is used in the solar heat power generation device of the present invention is not particularly limited, so long as the power generator is capable of converting heat into electricity. Examples of power generators include power generators that can generate power through evaporation of an evaporation medium such as water or ammonia, by the heated heat medium 2, and through rotation of a steam turbine by the resulting steam.

### EXAMPLES

The present invention will be explained next in detail on the basis of examples and comparative examples, but the invention is not meant to be limited to these examples.

In the examples and comparative examples, the characteristics of a stack of the various layers that make up the solar heat collection tube (stack of layers excluding the tube) were worked out and evaluated by relying on a multilayer film approximation on the basis of optical constants (n, k). Values of optical constants of the layers that are known can be sourced from the publication. In case of uncertainty, the optical constants were obtained by actually producing a single-layer film, and by measuring/calculating the optical constants (n, k) of each layer as necessary for multilayer film approximation.

### (Example 1)

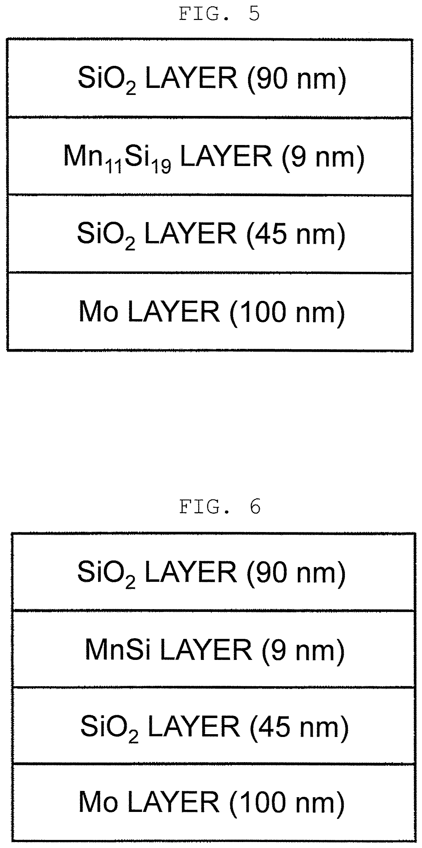

The absorption characteristic of a stack having the structure illustrated in Fig. 5 was worked out on the basis of a multilayer film approximation. To produce respective single-layer films for measurement of optical constants, quartz glass (30 mm long × 20 mm wide × 1 mm thick) was used as a substrate, the substrate temperature was set to room temperature, and respective single-layer films were then formed by sputtering. After film formation, each single-layer film was annealed at a temperature of 600°C to 800°C, for 1 hour, in a vacuum furnace. Herein an Ar atmosphere (flow rate 20 sccm, pressure 0.4 Pa) served as the atmosphere during sputtering. The SiO₂ layer was formed through generation of plasma at a sputtering power of 200 W, using a SiO₂ target and a high-frequency current (RF) power supply. The Mn₁₁Si₁₉ layer was formed using a Mn target, a Si target and a DC power supply, to generate plasma at a sputtering power of 5.5 W for Mn and a sputtering power of 50 W for Si.

Next, the absorption characteristic (corresponding to a heat collection temperature of 400°C) of the stack having the structure illustrated in Fig. 5 was worked out according to a multilayer film approximation on the basis of the optical constants (n, k) of Mo, the optical constants (n_{c}, k_{c}) of SiO₂ and the optical constants (nₛ, kₛ) of Mn₁₁Si₁₉. The results are illustrated in Fig. 4.

The optical constants (n, k) of Mo were referenced from the publication "Handbook of Optical Constants of Solids, Edward D. Palik, Academic Press, Boston, 1985". For the optical constants (n_{c}, k_{c}) of SiO₂ and the optical constants (nₛ, kₛ) of Mn₁₁Si₁₉ there were used measurement data from a spectroscopic ellipsometer, as well as data calculated from reflectance characteristics and transmittance characteristics measured using a spectrophotometer.

### (Example 2)

The absorption characteristic of a stack having the structure illustrated in Fig. 6 was worked out on the basis of a multilayer film approximation. A single-layer film for measurement of optical constants was produced under the same conditions as in Example 1. The MnSi layer was formed using a Mn target, a Si target and a DC power supply, to generate plasma at a sputtering power of 8.0 W for Mn and a sputtering power of 50 W for Si.

Next, the absorption characteristic (corresponding to a heat collection temperature of 400°C) of the stack having the structure illustrated in Fig. 6 was worked out according to a multilayer film approximation on the basis of the optical constants (n, k) of Mo, the optical constants (n_{c}, k_{c}) of SiO₂ and the optical constants (nₛ, kₛ) of MnSi. The results are illustrated in Fig. 4.

The optical constants (n, k) of Mo were referenced from the publication "Handbook of Optical Constants of Solids, Edward D. Palik, Academic Press, Boston, 1985". For the optical constants (n_{c}, k_{c}) of SiO₂ and the optical constants (nₛ, kₛ) of MnSi there were used measurement data from a spectroscopic ellipsometer, as well as data calculated from reflectance characteristics and transmittance characteristics measured using a spectrophotometer.

### (Comparative example 1)

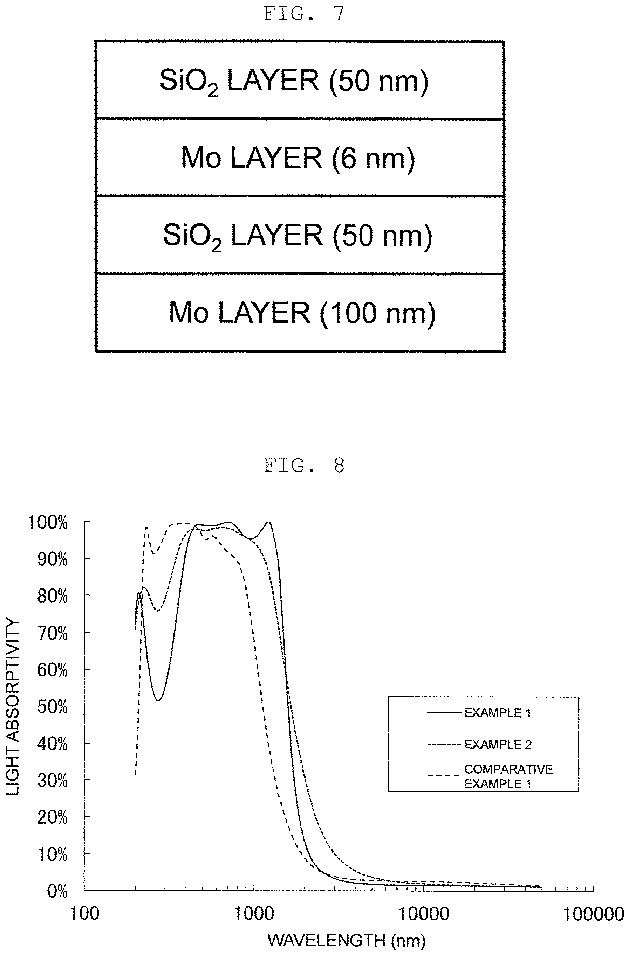

The absorption characteristic of a stack having the structure illustrated in Fig. 7 was worked out on the basis of a multilayer film approximation. A single-layer film for measurement of optical constants was produced under the same conditions as in Example 1.

Next, the absorption characteristic (corresponding to a heat collection temperature of 400°C) of the stack having the structure illustrated in Fig. 7 was worked out according to a multilayer film approximation on the basis of the optical constants (n, k) of Mo, the optical constants (n_{c}, k_{c}) of SiO₂. The results are illustrated in Fig. 4.

The optical constants (n, k) of Mo were referenced from the publication "Handbook of Optical Constants of Solids, Edward D. Palik, Academic Press, Boston, 1985". For the optical constants (n_{c}, k_{c}) of SiO₂ there were used measurement data from a spectroscopic ellipsometer, as well as data calculated from reflectance characteristics and transmittance characteristics measured using a spectrophotometer.

As illustrated in Fig. 8, light absorptivity in the stacks of Examples 1 and 2, in which manganese silicide was used in the sunlight-to-heat conversion layer, changed from a high absorptivity state to a low absorptivity state within a narrow wavelength range of 1000 nm to 2480 nm. In particular, the stack of Example 1, in which Mn₁₁Si₁₉ among manganese silicides was used in the sunlight-to-heat conversion layer had a steep slope of light absorptivity in the wavelength range of 1000 nm to 2480 nm (i.e. exhibited a sharp change in light absorption characteristic); it was thus found that the stack of Example 1 was capable of absorbing sunlight efficiently from the visible region to the near-infrared region, while allowing suppression of heat dissipation by thermal radiation.

By contrast, the stack of Comparative example 1, in which Mo was used in the sunlight-to-heat conversion layer, exhibited a gentle slope of change in light absorptivity, and revealed lower sunlight absorption efficiency than those of Examples 1 and 2, in that the change point at which absorptivity began to drop lay at a shorter wavelength (wavelength range shorter than 1000 nm) than those in the sunlight-to-heat conversion layers of Examples 1 and 2.

There were further calculated the absorptivity at a wavelength region of 280 nm to 4000 nm of sunlight, emissivity (400°C) and photothermal conversion efficiency of the stacks of the examples and the comparative example.

As a result, absorptivity was 89.9% in Example 1, 89.3% in Example 2 and 75.8% in Comparative example 1. Further, emissivity was 2.2% in Example 1, 4.4% in Example 2 and 3.0% in Comparative example 3. Photothermal conversion efficiency was 88.6% in Example 1, 86.6% in Example 2 and 74.0% in Comparative example 1.

As the above results reveal, the present invention allows the provision of a solar heat collection tube and a sunlight-to-heat conversion device that are capable of converting sunlight into heat efficiently. Further, a solar heat power generation device of high power generation efficiency can be provided through the use of the solar heat collection tube and sunlight-to-heat conversion device of the present invention.

### EXPLANATION ON NUMERALS

- 1: Solar heat collection tube
- 2: Heat medium
- 3: Tube
- 4: Infrared reflective layer
- 5: Sunlight-to-heat conversion layer
- 6: Anti-reflection layer
- 7: Light-transmitting layer
- 10: Sunlight-to-heat conversion device
- 11: Light-concentrating means

## Claims

1. A solar heat collection tube (1), comprising:
a tube (3) in which a heat medium (2) can flow;
an infrared reflective layer (4) formed on an outer surface of the tube (3);
a sunlight-to-heat conversion layer (5) formed on the infrared reflective layer (4); and
an anti-reflection layer (6) formed on the sunlight-to-heat conversion layer (5),
**characterized in that**
the sunlight-to-heat conversion layer (5) contains manganese silicide having Mn₁₁Si₁₉ as a main component.

2. The solar heat collection tube (1) according to claim 1, wherein a light-transmitting layer (7) is further formed between the infrared reflective layer (4) and the sunlight-to-heat conversion layer (5).

3. A sunlight-to-heat conversion device (10), comprising:
the solar heat collection tube (1) according to claim 1 or 2; and
light-concentrating means (11) for concentrating sunlight onto the solar heat collection tube (1).

4. A solar heat power generation device comprising the sunlight-to-heat conversion device (10) according to claim 3 and a power generator,
wherein power is generated by heating a heat medium (2) inside the solar heat collection tube (1) of the sunlight-to-heat conversion device (10), and utilizing thermal energy of the heated heat medium in the power generator.

## Patentansprüche

1. Sonnenwärmekollektorrohr (1), mit:
einem Rohr (3) in dem ein Wärmeträger (2) strömen kann;
einer infrarotreflektierenden Schicht (4), die auf einer Außenfläche des Rohrs (3) ausgebildet ist;
einer Sonnenlicht in Wärme umwandelnden Schicht (5), die auf der infrarotreflektierenden Schicht (4) ausgebildet ist; und
einer Antireflexionsschicht (6), die auf der Sonnenlicht in Wärme umwandelnden Schicht (5) ausgebildet ist,
**dadurch gekennzeichnet, dass**
die Sonnenlicht in Wärme umwandelnde Schicht (5) Mangansilicid enthält, das Mn₁₁Si₁₉ als einen Hauptbestandteil hat.

2. Sonnenwärmekollektorrohr (1) nach Anspruch 1, wobei zwischen der infrarotreflektierenden Schicht (4) und der Sonnenlicht in Wärme umwandelnden Schicht (5) außerdem eine lichtdurchlässige Schicht (7) ausgebildet ist.

3. Sonnenlicht in Wärme umwandelnde Vorrichtung (10), mit:
dem Sonnenwärmekollektorrohr (1) gemäß Anspruch 1 oder 2; und
einer Lichtkonzentrationseinrichtung (11), um Sonnenlicht auf das Sonnenwärmekollektorrohr (1) zu konzentrieren.

4. Sonnenwärme-Stromerzeugungsvorrichtung, die die Sonnenlicht in Wärme umwandelnde Vorrichtung (10) gemäß Anspruch 3 und einen Stromerzeuger umfasst,
wobei Strom erzeugt wird, indem ein Wärmeträger (2) innerhalb des Sonnenwärmekollektorrohrs (1) der Sonnenlicht in Wärme umwandelnden Vorrichtung (10) erhitzt wird und im Stromerzeuger Wärmeenergie des erhitzten Wärmeträgers genutzt wird.

## Revendications

1. Tube de captation de chaleur solaire (1), comprenant :
un tube (3) dans lequel un milieu caloporteur (2) peut circuler ;
une couche réfléchissant les infrarouges (4) formée sur une surface externe du tube (3) ;
une couche de conversion de lumière solaire en chaleur (5) formée sur la couche réfléchissant les infrarouges (4) ; et
une couche antireflet (6) formée sur la couche de conversion de lumière solaire en chaleur (5),
**caractérisé en ce que**
la couche de conversion lumière solaire en chaleur (5) contient du siliciure de manganèse ayant Mn₁₁Si₁₉ en tant que constituant principal.

2. Tube de captation de chaleur solaire (1) selon la revendication 1, dans lequel une couche de transmission de lumière (7) est en outre formée entre la couche réfléchissant les infrarouges (4) et la couche de conversion de lumière solaire en chaleur (5).

3. Dispositif de conversion de lumière solaire en chaleur (10), comprenant :
le tube de captation de chaleur solaire (1) selon la revendication 1 ou 2 ; et
des moyens de concentration de lumière (11) pour concentrer la lumière solaire sur le tube de captation de chaleur solaire (1).

4. Dispositif de production d'énergie thermique solaire comprenant le dispositif de conversion de lumière solaire en chaleur (10) selon la revendication 3 et un générateur électrique,
dans lequel de l'énergie est produite en chauffant un milieu caloporteur (2) à l'intérieur du tube de captation de chaleur solaire (1) du dispositif de conversion de lumière solaire en chaleur (10), et en utilisant l'énergie thermique du milieu caloporteur chauffé dans le générateur électrique.
